Europäisches Patentamt

European Patent Office

Office européen des brevets

(11) Publication number: 0 468 554 A2

# EUROPEAN PATENT APPLICATION

(21) Application number: 91201412.3

(22) Date of filing: 07.06.91

(51) Int. Cl.⁵: G09B 9/052, A61B 5/18

(30) Priority: 26.07.90 IT 6758890

(43) Date of publication of application:
29.01.92 Bulletin 92/05

(84) Designated Contracting States:
AT BE CH DE DK ES FR GB GR IT LI LU NL SE

(71) Applicant: Azzi, Galeazzo
Via G. Puccini 7
I-15110 Novi Ligure, Alessandria(IT)

Applicant: Busatta, Pier Luigi
Corso Acqui 145
I-15100 Alessandria(IT)

Applicant: Gaetani, Bernardo
Via Napoli 37
I-15100 Alessandria(IT)

(72) Inventor: Azzi, Galeazzo
Via G. Puccini 7
I-15110 Novi Ligure, Alessandria(IT)
Inventor: Busatta, Pier Luigi
Corso Acqui 145
I-15100 Alessandria(IT)
Inventor: Gaetani, Bernardo
Via Napoli 37
I-15100 Alessandria(IT)

(74) Representative: Robba, Eugenio et al
Studio "INTERPATENT" via Caboto 35
I-10129 Turin(IT)

(54) An apparatus for ascertaining and measuring the physical efficiency of motor vehicle users as well as their driving capabilities with and without the help of adapters and/or prosthesis.

(57) A drive simulator adapted for detecting the psychophysical and technical-functional attitudes of an individual, with the possibility of printing the results, comprising a motor vehicle cockpit that is adjustable to individuals of any size and height, provided with all the drive commands usually found in a motor vehicle, equipped with transducers and technical devices for providing measurements of the perception capabilities of an individual as required for driving fitness, and adapted to simulate adjustments of the commands and artificial prosthesis in order to analyse the driving capability of impaired persons that are anyhow capable of applying with their own means a correct energy to the controls. The measurements are carried out by means of sensors and/or transducers; the displaying thereof being by means of either analog or digital instruments.

EP 0 468 554 A2

FIG.1

The present invention relates to an apparatus capable of ascertaining and measuring the physical efficiency conditions of motor vehicles users and the driving capabilities thereof with and wihout the help of adapters and/or prosthesis.

Such apparatus is therefore aimed to supply objective evaluation data for the achievement, the confirmation and the review of a driving licence of any type and level.

It is known that the evaluation of the psychophysical, psychotechnical and aptitudinal conditions, the instrumental diagnostics and laboratory prescriptions are presently carried out at the local sanitary units of the examinee, or at contracted institutions, or even at hospitals.

Said institutions must have minimun requirements of structures, instruments and trained personnel with uniform characteristics all over the country according to an established standard.

Presently said medical institutions are equipped with instruments for helping in formulating a diagnosis concerning particular specializations so that in order to evaluate the examinee's fitness there are necessary instruments from several laboratories.

Such scattering of the equipments that on the contrary should be gathered in a single medical institution, brings about the shortcoming of causing discomfort to the users and a large cost to the public services.

It is therefore essential an accurate diagnosis of an impairment within the context of the residual functionality in order to ascertain the residual fitness to drive.

When the impairment requires the use of suitable corrective devices, prosthesis or purposely designed drive controls, the medical committee has to be able to judge after due consideration whether or not a correct action would be ensured by the would be driver under any circumstances.

Frequently a rejection of a driving licence is mainly due to the fact that the impaired person faces the committee wearing prosthesis or artificial limbs having a good appearance but insufficient functional capabilities with respect to the use of the controls when driving.

The object of the present invention is that of providing an apparatus suitable for cooperating with technical and medical equipments having structural and functional characteristics such as to overcome the above mentioned inconveniences of the prior art

Namely the apparatus of the invention: a) allows for a complete drive simulation thanks to controls purposely designed for physically impaired persons; b) gathers all the results of the recorded measurements into a single document issued as a technical support to the medical committee in charge of issuing the medical certificate for the issue, the confirmation or the review of the driving licence.

Substantially the subject apparatus is a simulator comprising a motor vehicle cockpit that is adjustable to individuals of any size and height and provided with all the drive commands usually found in a motor vehicle, characterized in that it is equipped with transducers and technical devices for providing measurements of the perception capabilities of an individual as required for driving fitness, and is adapted to simulate adjustments of the commands and artificial prosthesis in order to completely analyse the driving capability of impaired persons that are anyhow capable of applying with their own means a correct energy to the controls; said cockpit housing all the specialistic tools for detecting the psychophysical and technical-functional attitudes desired, with the possibility of printing the results on a proper certificate; the measurements being carried out by means of sensors and/or transducers that are calibrated for an absolute reading; the displaying of the measurements being either in analogical form through analog instruments or in digital form through analog-to-digital conversion unit; the digitizing of said measurement allowing for the processing of the data by means of microprocessor systems that interpretates the measurements and modify the system simulation, and further automatically print the data without interpretation errors.

Some of the indications that are adpted to supply a measurement of the physical and perceptive capabilities of the examinee, as well as mechanical and anatomical measurements are listed hereinbelow:

- amount of the mean torque applied to the steering wheel and quickness of the application;
- amount of the force applied to the pedals and quickness of the application thereof;
- amount of the force applied to the gearshift lever and the parking brake and quickness of the application thereof;
- reaction time to simple stimuli, both visual and acoustic;
- measurement of the ankle, knee, hip, neck and spinal column articulations;
- measurement of the acoustic perception;
- measurement of the visual sharpness and of the chromatic sense;
- measurement of the visual sharpness under poor light conditions (night vision);
- measurement of the visual field and ascertainment of the binocular vision;
- simultaneous measurement of the various controls such as brake/steering wheel, steering wheel/gearshift lever, steering wheel/turn indicators and lights exchange and the like;

- ascertainment of the individual capability to act (and to what extent) onto controls that are at the minimum and maximum distances of the marketed vehicles in order to ascertain whether an adaptation such as increasing the pedal length for a very short driver or moving farther the seat for a very tall driver is required;

- ascertainment of the individual's capability to act (and to what extent) onto other adapters or prosthesis provided to compensate for other physical handicaps and ascertainment of the real effectiveness thereof, such as power-assisted steering, power-assisted brake, automatic transmission, automatic clutch and the like.

The invention will now be detailedly described with particular reference to the attached drawings supplied only as non limiting examples, in which:

- Fig. 1 is a perspective view of a cockpit embodying the main devices according to the present invention;

- Fig. 2 is a schemaic plan view of the cockpit of Fig. 1 showing the working thereof with a very tall individual;

- Fig. 3 is a schematic plan view of the cockpit of Fig. 1 showing the working thereof with a very short individual;

- Fig. 4 is a schematic side view of the cockpit of Fig. 1 showing the working thereof with a very tall individual;

- Fig. 5 is a schematic plan view of the cockpit of Fig. 1 showing the working thereof with a very short individual;

- Fig. 6 is schematic view of the device for measuring the torque applied to the steering wheel, the device for finely adjusting the height of the steering wheel and the device for measuring the quickness of the action over said steering wheel;

- Fig. 7 is schematic view of the device for measuring the force applied to the gearlever and the device for measuring the force applied to the parking brake;

- Fig. 8 and 8 bis are a schematic view of the device for measuring the force applied to the pedals commanding the clutch, the brake and the gas;

Fig. 9 is a schematic view of the device for roughly adjusting and locking the position of the sleeve supporting the steering wheel;

Fig. 10 is a schematic view of the system for adjusting the pedals' position;

Fig. 11 is a schematic view illustrating the operation of a device allowing for the rough adjustement of the seat (the fine adjusting and the tilting of the back are achieved as in a usual car seat;

Fig. 12 is a flow chart of the apparatuses for the data input, the parameters detection and the recording installed on the drive simulator.

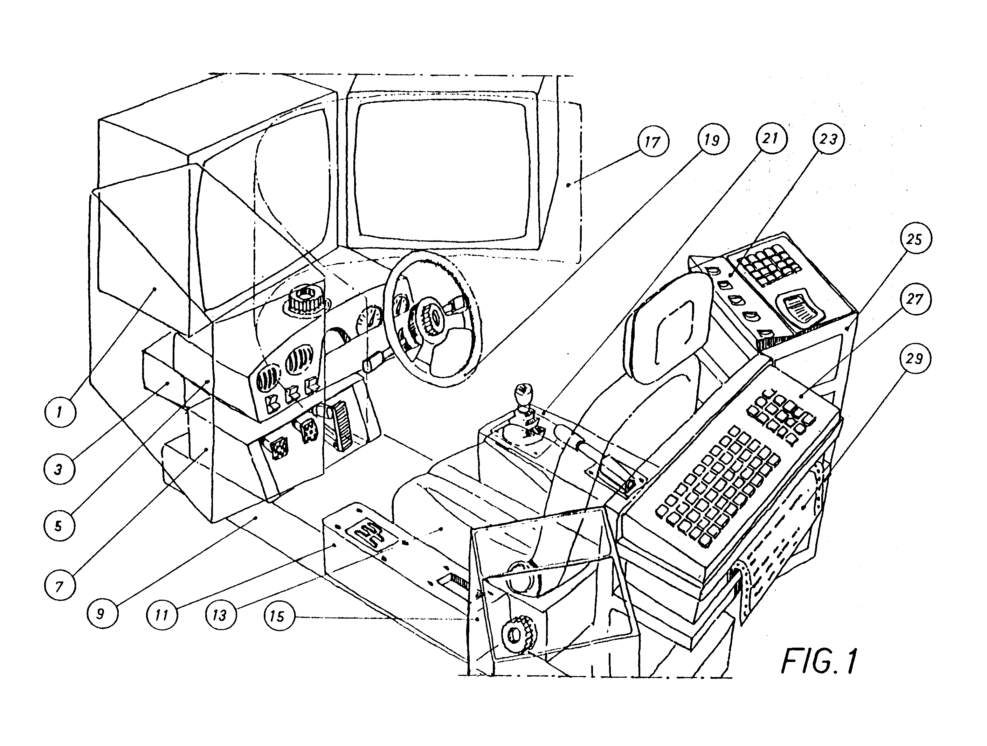

As it is clear from Fig. 1, 1 designates the color screens covering the visual field of the subject under examination, 3 designates the fixed support frame, 5 the adjustable movable support frame carrying the sleeve for the steering column. The instrumentation simulates that of a motor car with loudspeakers for emitting acoustic signals. 7 designates a movable frame made up by three separable portions containing the control pedals, 9 designates the basement fixed frame, 11 a housing for the brake lever and the gearshift lever located at the left side. 13 designates an adjustable and tiltable seat, 15 a housing adapted for containing oculistic equipments, 17 a wide screen for checking the visual stimuli. 19 designates an adjustable steering wheel, 21 a housing for the brake lever and the gearshift lever located at the right side, 23 acoustic equipments. Finally 25 designates a swivelling housing, 27 an equipment for entering and recording data, 29 an equipment for printing certificates and reports.

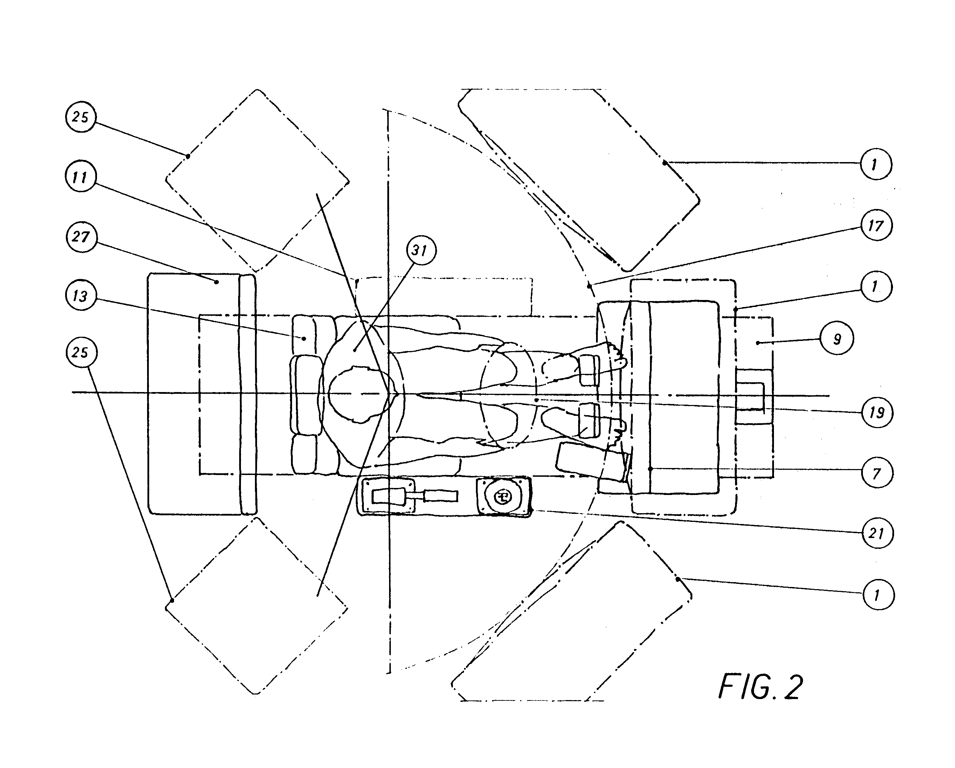

Fig. 2 shows a plan view of the simulator of Fig. 1 that has been adjusted for a very tall individual 31; the devices shown in such figure being designated by the same numeral references of Fig. 1.

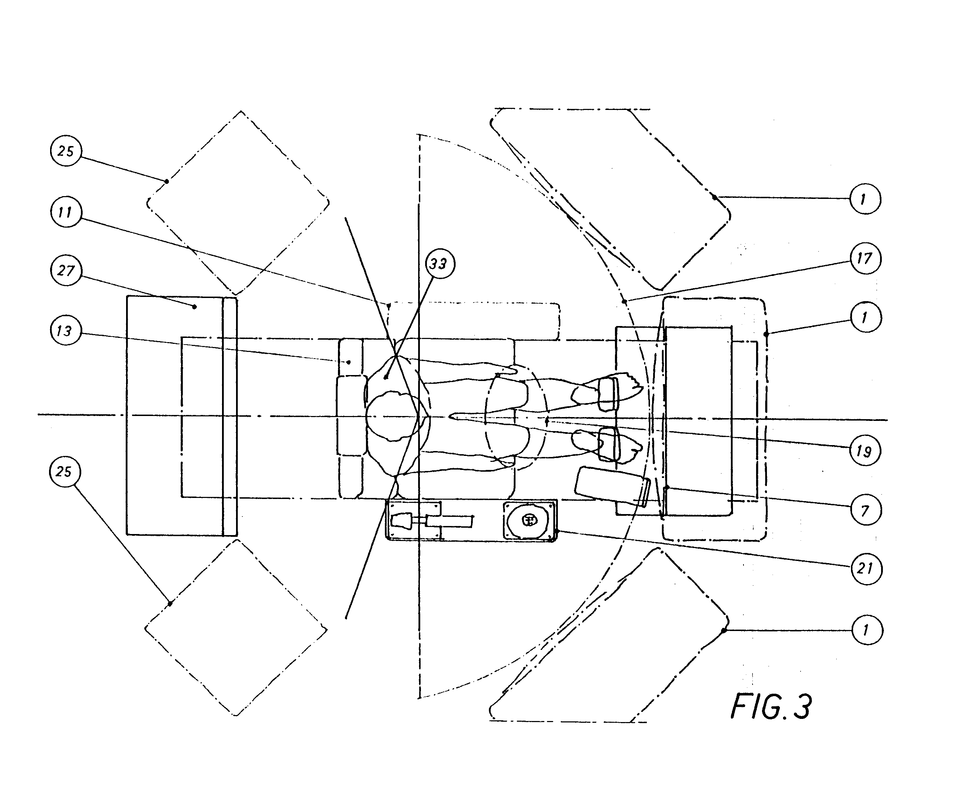

Fig. 3 is quite similar to Fig. 1, the numeral references being the same of Figs. 1 and 2, but for the very short individual designated by 33.

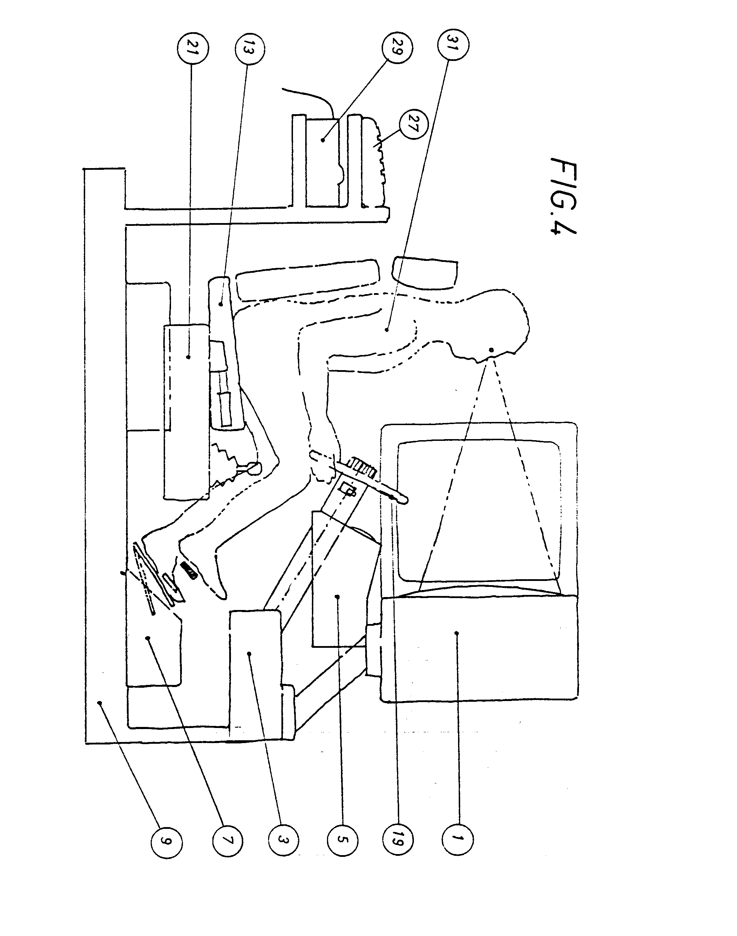

In Fig. 4 that illustrates a side view of a very tall individual 31, it is clearly shown the cockpit adjusted to such an individual. The numeral references are the same as in the preceding figures.

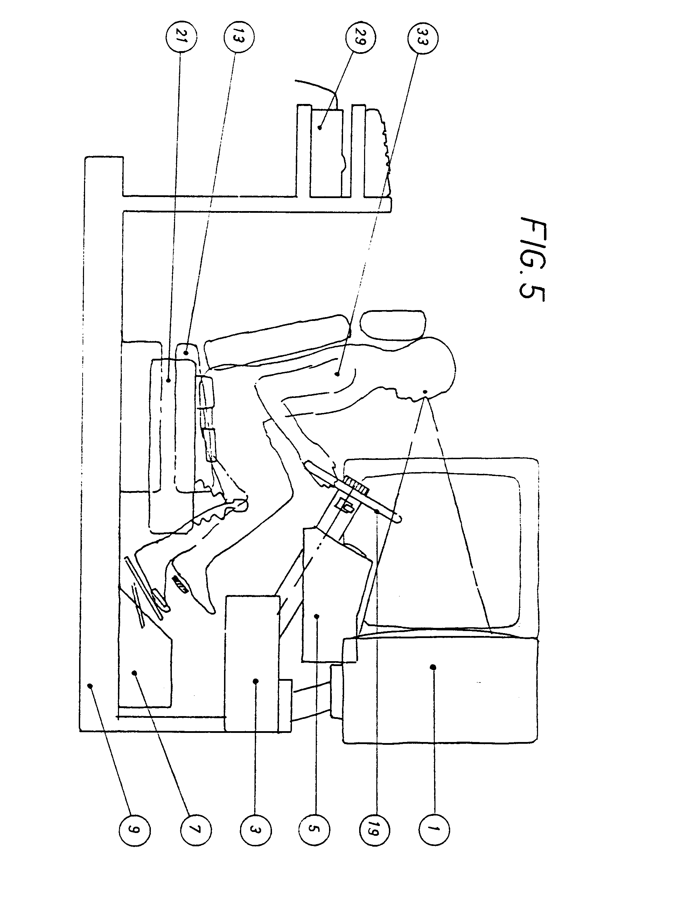

The same applies to Fig. 5 showing a side view of the very short individual 33 of Fig. 3.

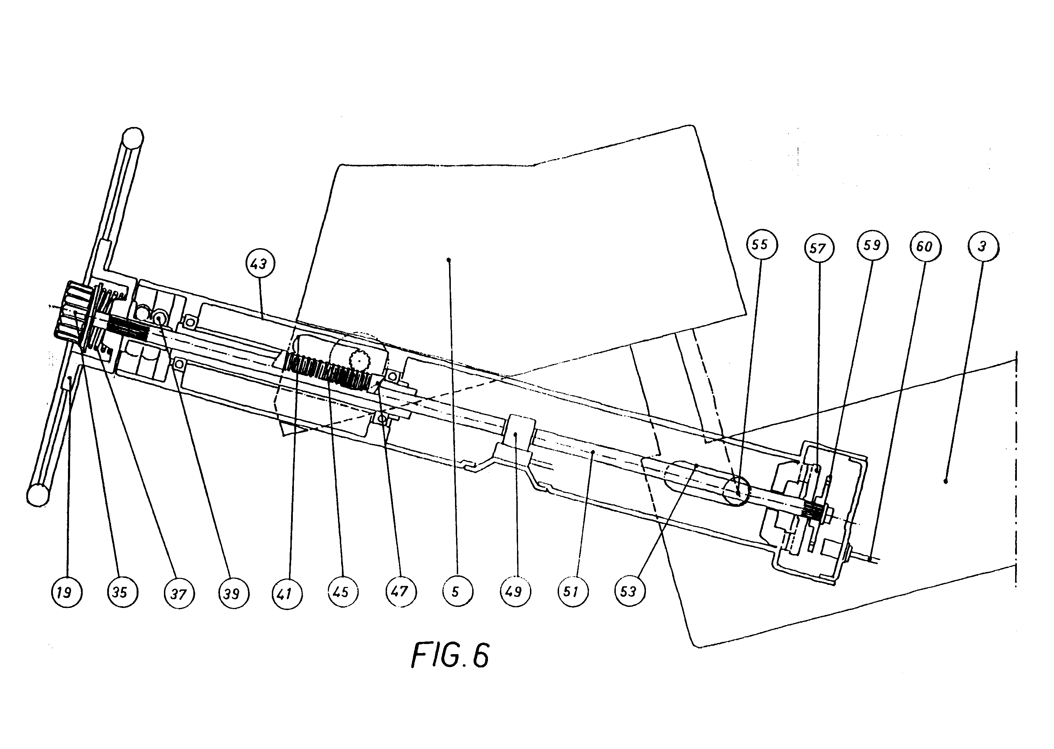

The steering wheel 19 of Fig. 6 is designed as removable for housing devices for anchoring an impaired limb and carries a knob 35 for adjusting the tension of a calibrated spring 37 which is regulated so as to change the frictional force acting over the pair of disks 57. 39 designates a housing for levers commanding the lights and the turn indicator with the associated microswitches, 41 a first slot cut in the movable sleeve 43, 45 the pinion-rack coupling for the axial displacement of the sleeve 43. 47 designates a knob actuating the rack, 5 the movable frame for the rough adjustment of the position of the steering wheel 19, 49 the device for detecting the amount of the torque acting on shaft 51, 53 a second slot cut in the movable sleeve 43. Finally 55 designates a pin for anchoring or fixing the sleeve 43 to the rough adjustment guide and acting as a stop for the sleeve, 57 the friction disks simulating the resistance offered by a steering wheel 19, 59 designates the movable member of the device for detecting the speed of rotation, and 60 the fixed member of a trasducer of the speed of rotation.

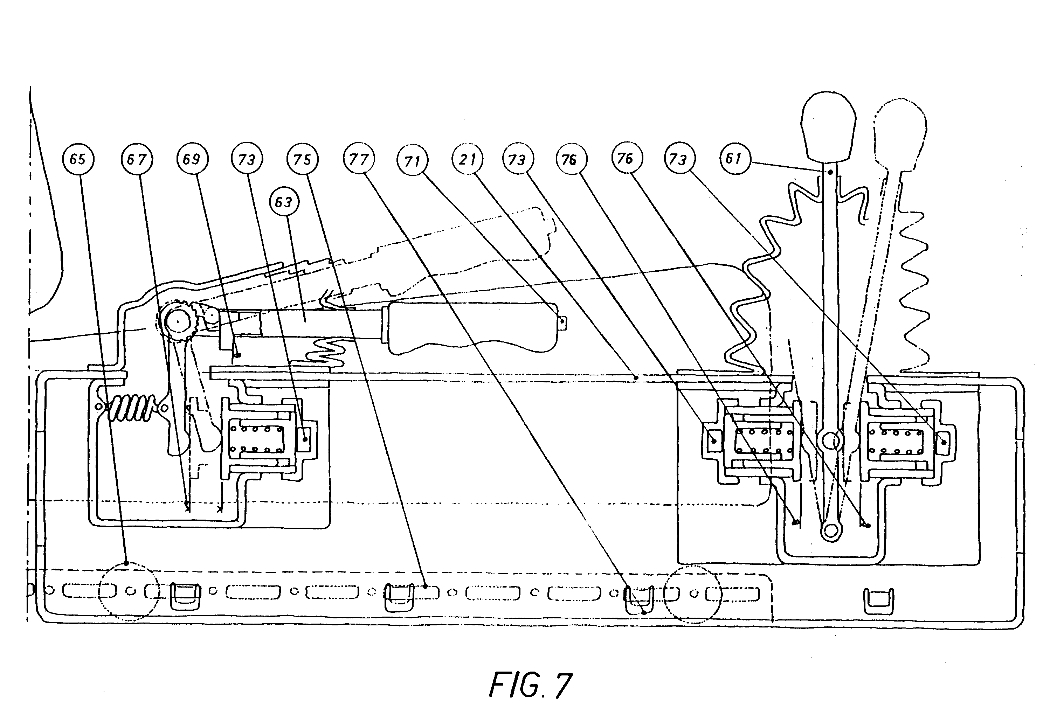

In Fig. 7 that illustrates the device for measuring the force applied to the gearshift lever 61 and to the lever 63 of the parking brake, 65 designates a knob for locking the housing over the bottom plane, 67 the limit microswitchses for the stroke of the brake lever 63, 69 the microswitch that is actuated by the push button 71, 73 the force sensor with adjustable spring. Then 75 designates the slot cut at the base of the bottom for longitudinally adjusting the position of the housing 11 or 21, 77 designates the tabs for anchoring said housing 11 or 21 to the base of the bottom, 73 the force sensors with adjustable spring, 76 the limit microswitches for the forward and backward strokes of the gearshift lever 61.

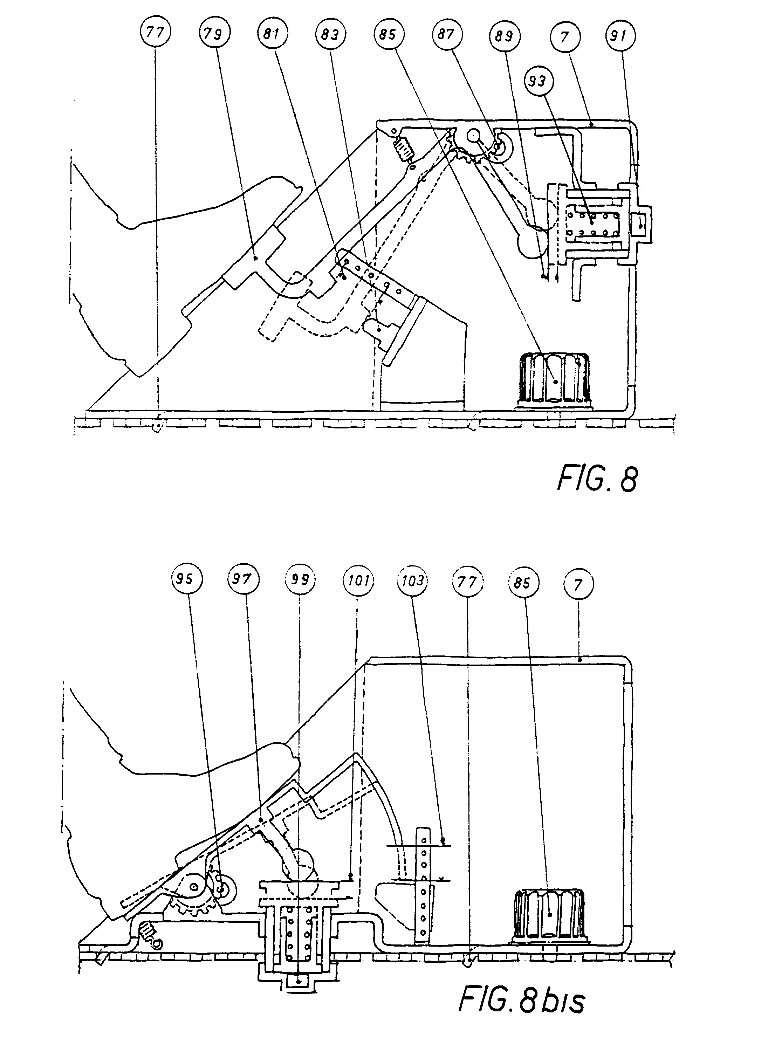

In Fig. 8 that illustrates the device for measuring the force applied to the pedals commanding the clutch and the brake, 77 designates a tab for anchoring the movable housing 7 to the basement 9, 79 the brake or clutch pedal, 81 the limit microswitches for the lever stroke, 83 the adjustable stroke stop, 85 the locking knob. 87 designates the device for sensing the quickness or the gradualness when actuating or releasing the pedal, 89 the limit microswitches for the force sensor 91, 93 an adjustable spring.

In Fig. 8bis, 95 designates the device for sensing the quickness or the gradualness when actuating or releasing the accelerator pedal 97, 99 the force sensor with adjustable spring, 101 the limit microswitches for the force sensor 99, 103 the limit microswitches for the far end of the accelerator lever.

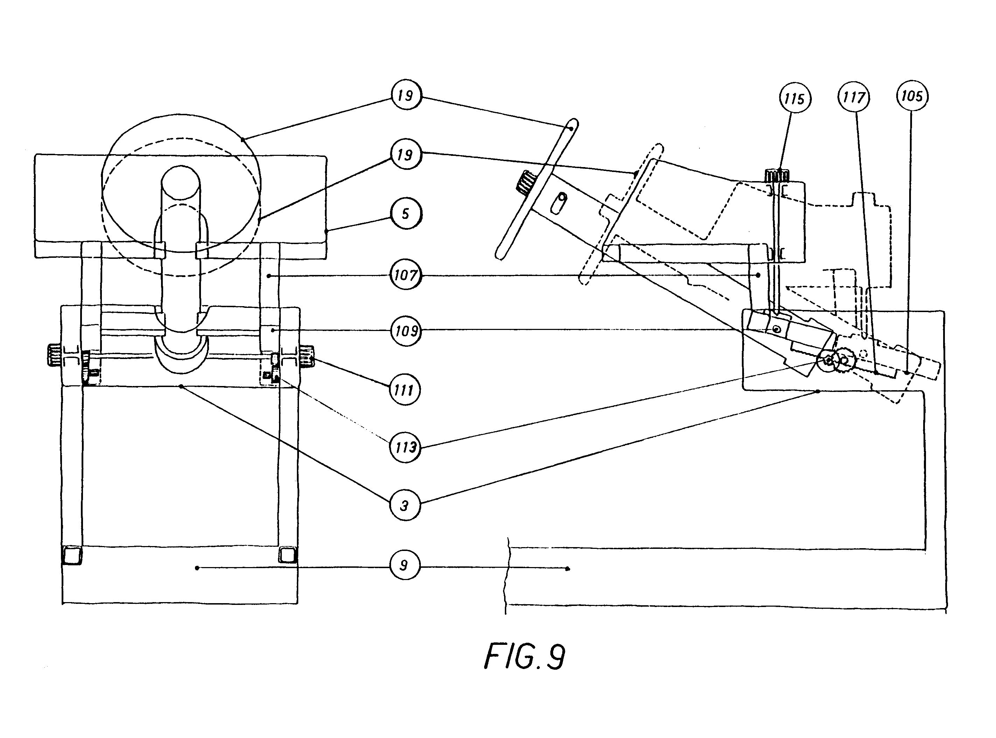

In Fig. 9 that illustrates the rough adjustement device and the locking of the position of the sleeve 43 supporting the steering wheel 19, 5 designates the movable frame carrying the seat of the steering sleeve 43 and rigidly translable parallel to the guide 105, 107 designates the arm supporting the movable frame 5, 109 the slide with the anchor pin of the sleeve 43, 111 the knob for actuating the movable frame, 113 the reduction gear. The fixed frame is still designated by 3 and the basement by 9. It is to be noted that 115 designates the knob for locking the movable frame 5 in the reached position, 117 the rack engaged by the last gear wheel of the reduction gear 113.

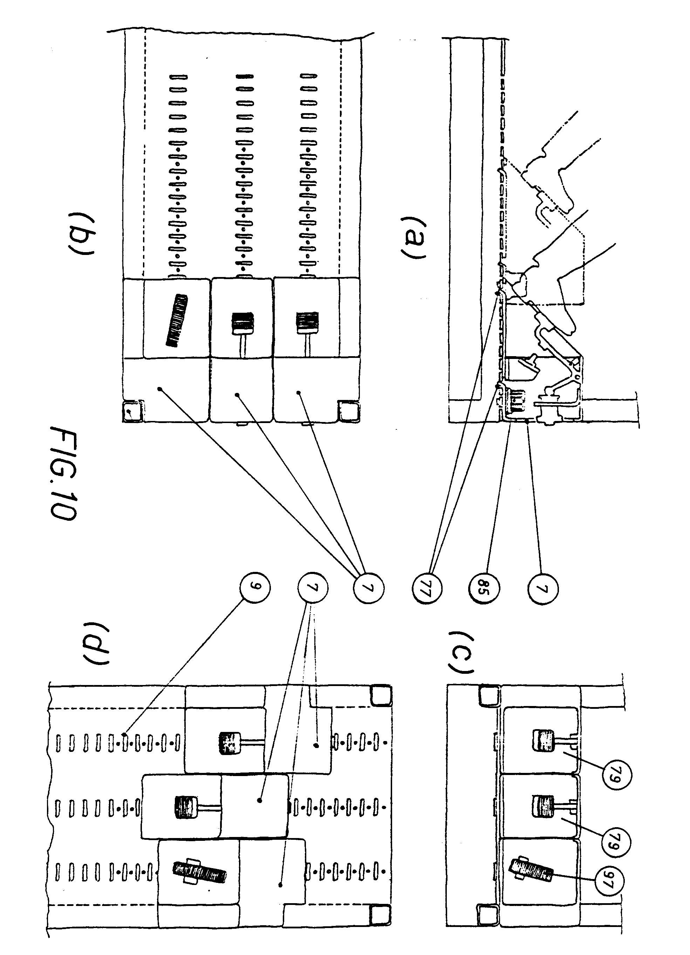

Fig. 10 schematically shows the system for adjusting the position of the pedal group 7. In a) said pedal group is shown in an advanced position in solid lines and in a retroceded position in phantom lines. In b) there is shown a plan view with the whole pedal group in an advanced position; in d) a generic position of the pedal group is shown.

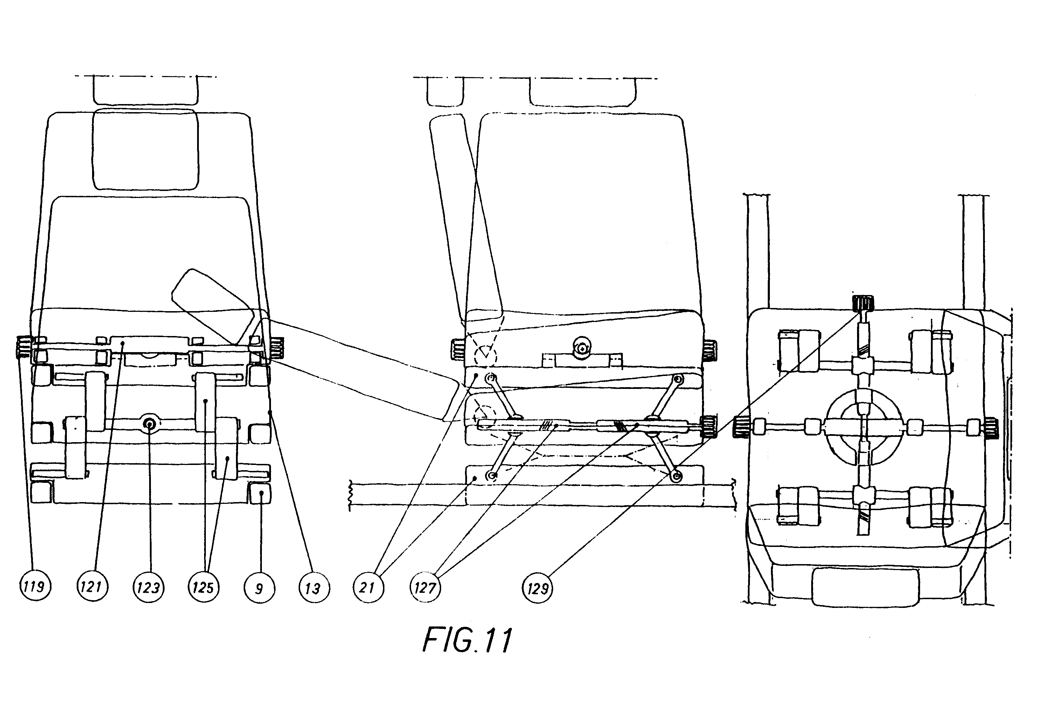

In Fig. 11 that illustrates the device for the rough adjustment and the seat rotation, 119 designates the knob for actuating the shaft carrying the eccentric 121 for locking the seat 13 in a normal position and in a rotated position. 123 designates the axis of the screw commanding the double linkage 125, 21 the plates supporting the seat 13 the spacing of which is adjusted by means of linkage 125, 127 designates the right-left screw for actuating the linkages, and 129 the knob for rotating the screw 127. In phantom lines there is shown the linkage in a lowered position.

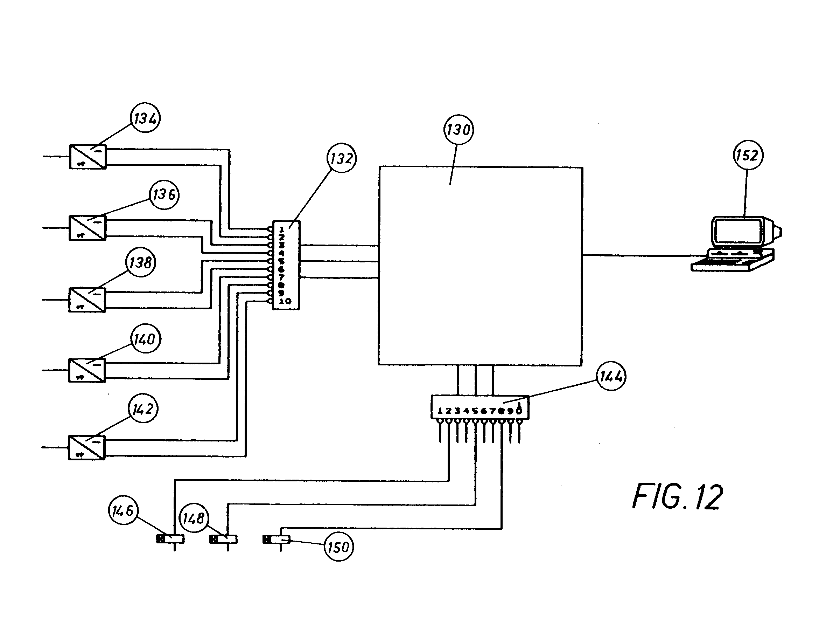

As already stated, in Fig. 12 there is shown a block diagram of the apparatuses for the data input, the parameters detection and the recording. 130 designates the central process unit made up by a processor the input of which is connected to a data acquisition board 132 which in turn is connected to the acceleration sensor 134, brake sensor 136, steering sensor 138, horn sensor 140, drive components sensor 142. An output of said central unit 130 is in turn connected to an output board 144, in turn connected to the lamps drive unit 146, the solenoid drive unit 148, the actuators command unit 150. 152 schematically shows a computer video.

The illustrated apparatus is set for accepting modifications to be studied for each particular case in accordance with the user's impairment, so that he/she is capable of accomplishing the manoeuvres required for driving the vehicle.

It is evident that the invention is not limited to the embodiments that have been described and illustrated, but that several modifications and further improvements can be made thereto while remaining within the scope of the invention.

## Claims

1.  A simulator comprising a motor vehicle cockpit adjustable to individuals of any size and height and provided with all the drive commands usually provided for in a motor vehicle, characterized in that it is provided with transducers and technical devices for providing measurements of the perception capabilities of an individual as required for driving fitness, and it is adapted to simulate adjustments of the commands and artificial prosthesis in order to completely analyse the driving capability of impaired persons that are anyhow capable of applying with their own means a correct force to the controls; said cockpit housing all the specialistic tools for detecting the psychophysical and technical-functional attitudes desired, with the possibility of printing the results on a proper certificate; the measurements being carried out by means of sensors and/or transducers that are calibrated for an absolute reading; the displaying of the measurements being either in analogical form through analog instruments or in digital form through analog-to-digital conversion unit; the digitizing of said measurement allowing for the processing of the data by means of microprocessor systems that interpretates the measurements and modify the system simulation, and further automatically print the data without interpretation errors.

2. A simulator as claimed in claim 1, characterized in that said technical devices and the apparatuses provided therein substantially are: color screens (1) covering the visual field of the individual under examination, a fixed support frame (3), and an adjustable movable support frame (5) carrying the sleeve (43) for the steering column (19); a movable frame (7) made up by three separable portions containing the control pedals; a basement fixed frame (9); a housing for the brake lever and the gearshift located to the left (11) and to the right (21) of the user, respectively, an adjustable and tiltable seat (13); a housing (15) adapted to house oculistic equipments; a wide screen (17) for checking the visual stimuli; acoustic equipments (23); at least a swivelling housing (25); an equipment (27) for entering and recording data; an equipment (29) for printing certificates and reports.

3. A simulator as claimed in claim 1 and 2, characterized in that the torque transducer applied to the steering wheel comprises an elastic means, such as a spring, suitably calibrated.

4. A simulator as claimed in claims 1, 2 and 3, characterized in that the length adjustment of the steering column is carried out by means an eccentric locking device actuated by a lever or other equivalent means.

5. A simulator as claimed in claims 1, 2, 3 and 4, characterized in that the device for adjusting the length of the steering column is equipped with adjustable stops located at programmable intervals.

6. A simulator as claimed in the preceding claims, characterized in that the actuation of the length adjustment and the tilting of the steering column are carried out through a dedicated electric motor or equivalent means, controlled either by the examiner or by the individual.

7. A simulator as claimed in the preceding claims, characterized in that the locking and the unlocking of the position of the steering column carried out through a mechanical electromagnetic control.

8. A simulator as claimed in the preceding claims, characterized in that the detection of the force applied to the pedals and of the gradualness of such force application is carried out through electric strain gauges applied over a suitable dynamic leaf spring.

9. A simulator according to an equivalent of claim 8, characterized in that said detecting of the force applied to the pedals and of the gradualness of such force application is carried out through a dedicated electric and hydraulic system.

10. A simulator according to another equivalent of claim 8, characterized in that detecting of the force applied to the pedals and of the gradualness of such force application is carried out through a hydraulic system.

FIG.1

FIG. 2

FIG.3

FIG.4

FIG. 5

11

FIG.6

FIG.7

FIG. 8

FIG. 8 bis

14

FIG.9

FIG.10

FIG.11

FIG.12